# FASCICULE DE BREVET EUROPEEN

(11) **EP 3 258 778 B1**
(45) Date de publication et mention de la délivrance du brevet: **16.01.2019**
(21) Numéro de dépôt: 15711246.7
(22) Date de dépôt: 17.02.2015
(51) Int. Cl.: A01M 7/00

(54) **SYSTÈME DE COMMANDE, RAMPE DE PULVÉRISATION, PORTEUR ET PROCÉDÉ DE MISE EN OEUVRE**
STEUERUNGSSYSTEM, SPRÜHBALKEN, TRÄGER UND VERFAHREN ZUR IMPLEMENTIERUNG
CONTROL SYSTEM, SPRAY BAR, CARRIER AND METHOD OF IMPLEMENTATION

(43) Date de publication de la demande: 27.12.2017
(73) Titulaire: Exel Industries, 51200 Epernay (FR)
(72) Inventeur: ROUYER, Sébastien, 51130 Vert Toulon (FR); MICK, Mathieu, 51170 Chambrecy (FR)
(74) Mandataire: Legrand, François
(86) Numéro de dépôt international: PCT/FR2015/050386
(87) Numéro de publication internationale: WO 2016/132023

(56) Documents cités:
- EP-A1- 1 167 095
- FR-A1- 2 996 412
- US-A1- 2007 289 298
- US-A1- 2014 196 996

## Description

La présente invention concerne un système de commande, prévu pour équiper une rampe de pulvérisation montée sur un porteur et présentant une inclinaison réglable par rapport au porteur et au sol. L'invention concerne également une rampe de pulvérisation équipée d'un tel système de commande, un porteur équipé d'une telle rampe de pulvérisation, ainsi qu'un procédé de mise en oeuvre d'un tel système de commande. Le domaine de l'invention est celui des rampes de pulvérisation agricoles.

Lorsqu'un véhicule agricole équipé d'une rampe de pulvérisation est amené à travailler sur un sol irrégulier, comportant par exemple des ornières, il est connu d'utiliser un vérin de dévers pour repositionner la rampe parallèle au sol. En outre, il est connu d'associer un dispositif d'amortissement au vérin pour atténuer les oscillations de la rampe dues aux irrégularités du sol.

US-A-2014 196 996 décrit un exemple de système de commande d'une rampe de pulvérisation. Le système de commande comprend un vérin de dévers incluant deux chambres séparées par un piston. Le système de commande comprend également un dispositif d'amortissement, incluant deux accumulateurs raccordés respectivement aux deux chambres du vérin. Chaque accumulateur permet d'amortir les variations de pression dans la chambre correspondante.

Le but de la présente invention est de proposer un système de commande amélioré d'une rampe de pulvérisation.

A cet effet, l'invention a pour objet un système de commande, prévu pour équiper une rampe de pulvérisation montée sur un porteur et présentant une inclinaison réglable par rapport au porteur, le système de commande comprenant : un actionneur pour modifier l'inclinaison de la rampe de pulvérisation ; un dispositif de pilotage pour piloter l'actionneur ; et un dispositif d'amortissement connecté à l'actionneur pour amortir des vibrations et oscillations de la rampe de pulvérisation et ainsi stabiliser l'inclinaison. Le système de commande est caractérisé en ce qu'il comprend également un dispositif de rechargement fonctionnant simultanément au dispositif de pilotage pour compenser une variation de pression dans le dispositif d'amortissement lors d'une modification de l'inclinaison de la rampe de pulvérisation.

Ainsi, l'invention permet d'ajuster l'inclinaison de la rampe par rapport au sol, d'amortir les irrégularités du terrain et de recharger le dispositif d'amortissement à chaque modification de l'inclinaison de la rampe. En pratique, cette modification résulte de l'actionnement d'une fonction correction de dévers.

Selon d'autres caractéristiques avantageuses de l'invention, prises isolément ou en combinaison :
- La modification de l'inclinaison de la rampe de pulvérisation résulte de l'actionnement manuel d'une fonction correction de dévers par l'opérateur.
- La modification de l'inclinaison de la rampe de pulvérisation résulte de l'actionnement automatique d'une fonction correction de dévers.
- Le dispositif de rechargement comprend un distributeur incluant une position anti-retour et une position de circulation.
- Le dispositif de rechargement comprend également un limiteur de pression réglable à action directe et un clapet anti-retour, disposés en parallèle l'un par rapport à l'autre, et disposés en série par rapport au distributeur.
- Le dispositif de rechargement est positionné en aval du dispositif d'amortissement, par rapport à l'actionneur.
- L'actionneur est un vérin double effet à tige traversante, comprenant un corps creux, un piston mobile dans le corps creux, une tige solidaire du piston et s'étendant de chaque côté du corps, et deux chambres séparées par le piston dans le corps.
- L'actionneur est formé par deux vérins simple effet montés en opposition et présentant une même section.
- Le dispositif d'amortissement comprend deux accumulateurs, chacun rechargeable par le dispositif de rechargement en cas de dépression par rapport à l'autre accumulateur.
- Le dispositif d'amortissement comprend deux distributeurs tout-ou-rien, de manière à activer ou désactiver l'amortissement.
- Le dispositif d'amortissement comprend deux distributeurs proportionnels, de manière à régler la dureté d'amortissement.

L'invention a également pour objet une rampe de pulvérisation, adaptée pour être montée sur un porteur et présentant une inclinaison réglable, caractérisée en ce que la rampe de pulvérisation est équipée d'un système de commande tel que mentionné ci-dessus.

L'invention a également pour objet un porteur, par exemple un véhicule ou une remorque agricole, équipé d'une rampe de pulvérisation telle que mentionnée ci-dessus. Le porteur peut être automoteur, porté ou trainé.

L'invention a également pour objet un procédé de mise en oeuvre d'un système de commande tel que mentionné ci-dessus. Le procédé comprend une étape de dévers consistant à modifier l'inclinaison de la rampe de pulvérisation, dans laquelle le dispositif de pilotage pilote l'actionneur tandis que le dispositif de rechargement compense une variation de pression dans le dispositif d'amortissement. Dans cette étape, qui résulte de l'actionnement de la fonction correction de dévers, le rechargement est réalisé automatiquement et simultanément au pilotage.

L'invention sera mieux comprise à la lecture de la description qui va suivre, donnée uniquement à titre d'exemple non limitatif et faite en référence aux dessins annexés sur lesquels :
- la figure 1 est une vue arrière d'un porteur conforme à l'invention, du type véhicule agricole, équipé d'une rampe de pulvérisation et d'un système de commande également conformes à l'invention ;
- la figure 2 est une vue analogue à la figure 1, montrant la rampe de pulvérisation inclinée par rapport au véhicule et au sol, alors que le véhicule a une roue dans une ornière ;
- la figure 3 est une vue arrière, partielle et à plus grande échelle, de la rampe de pulvérisation des figures 1 et 2 ;
- la figure 4 est une vue en perspective, partielle et à plus grande échelle, de la rampe de pulvérisation des figures 1 et 2 ;
- la figure 5 est une vue arrière analogue à la figure 3, encore plus partielle et à plus grande échelle, de la rampe et du système de commande ;
- la figure 6 est une vue avant analogue à la figure 5 ;
- la figure 7 est un schéma hydraulique du système de commande des figures 1 à 6;
- la figure 8 est un schéma analogue à la figure 7, lors de l'inclinaison de la rampe de pulvérisation sur un premier côté ;
- la figure 9 est un schéma analogue à la figure 7, lors de l'inclinaison de la rampe de pulvérisation sur un deuxième côté ; et
- la figure 10 est un schéma analogue à la figure 7, lors de l'amortissement des vibrations subies par la rampe.

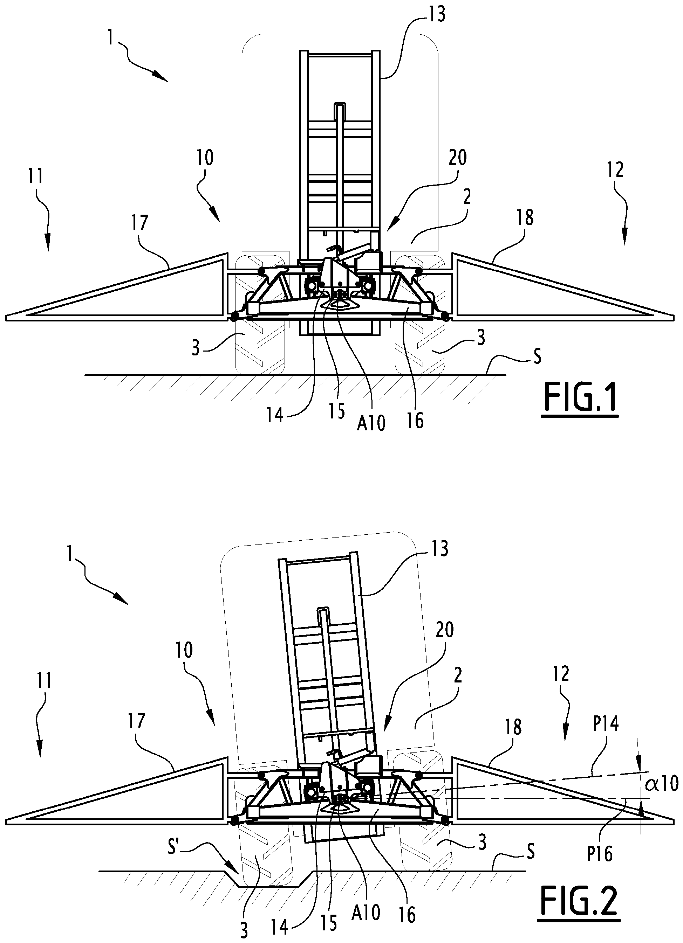

Sur les figures 1 et 2 est représenté un porteur conforme à l'invention, du type véhicule agricole 1. En variante, le porteur peut être de tout autre type adapté à l'application visée. Le véhicule 1 comprend un châssis 2 et des roues 3 mobiles en rotation par rapport au châssis 2. Les roues 3 sont représentées reposant au sol S, qui est régulier sur la figure 1 et comporte une ornière S' sur la figure 2.

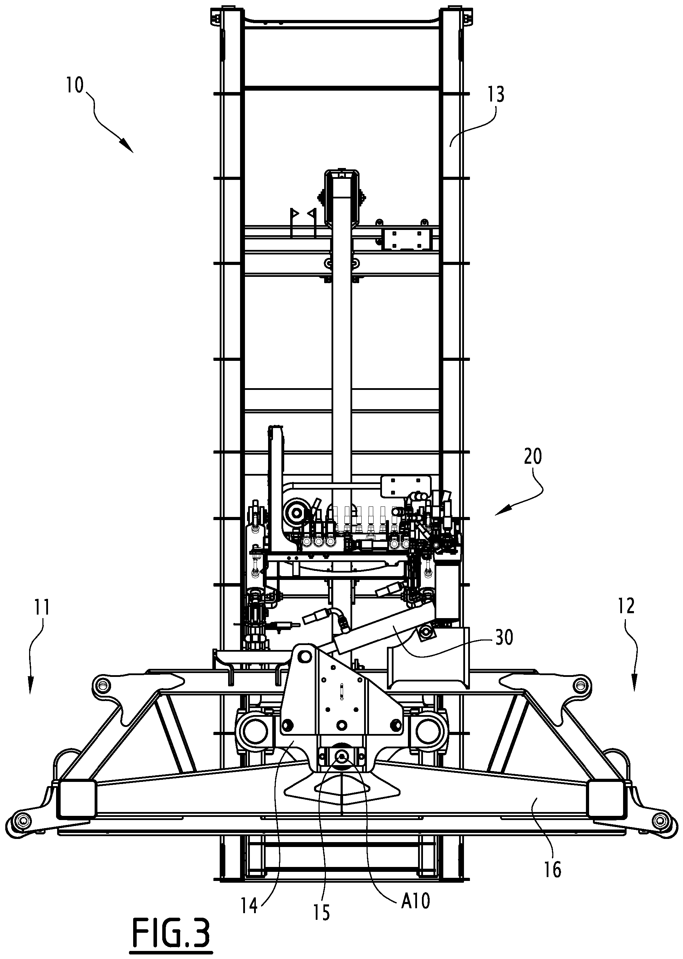

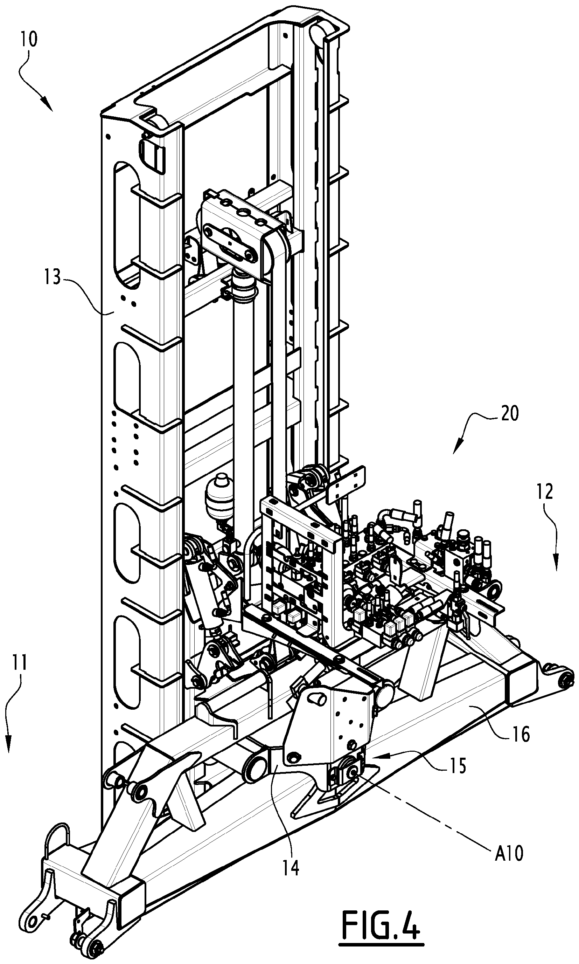

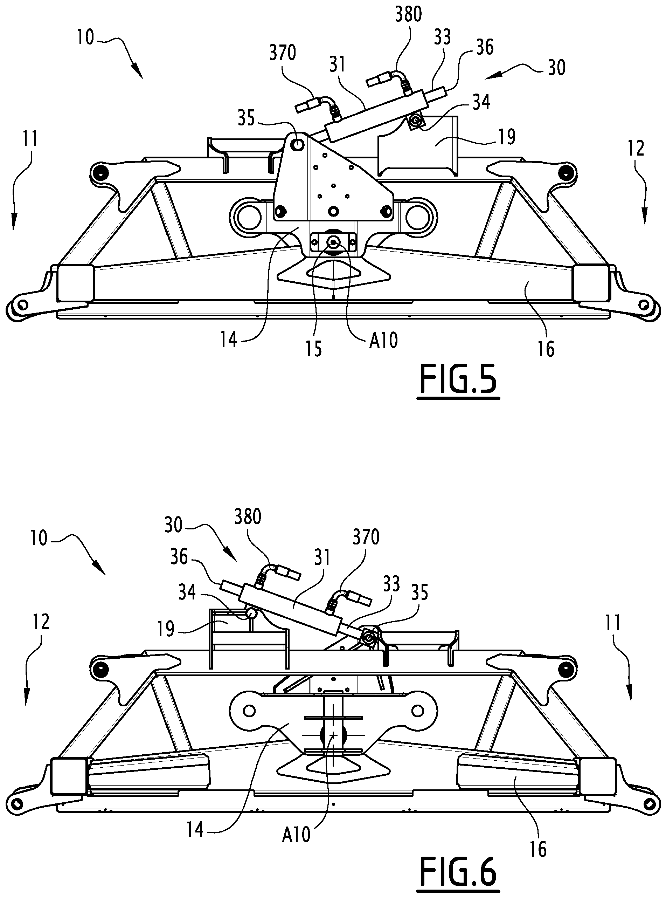

Le véhicule 1 est équipé d'une rampe de pulvérisation 10, également conforme à l'invention. Dans un but de simplification, la rampe de pulvérisation 10 et ses éléments constitutifs sont partiellement représentés aux figures 1 à 6.

La rampe 10 s'étend suivant une direction horizontale entre un côté gauche 11 et un côté droit 12. L'orientation des côtés 11 et 12 est définie par rapport à la direction d'avance du véhicule 1. La rampe 10 comprend un support fixe 13, un chariot mobile 14, une articulation 15, une partie inclinable 16 et deux bras pulvérisateurs 17 et 18. Le support 13 est fixé au châssis 2 du véhicule 1. Le chariot 14 est monté en liaison glissière sur le support 13. Le chariot 14 est mobile suivant une direction verticale par rapport au support 13, pour abaisser ou relever les bras 17 et 18. La partie inclinable 16 est mobile en rotation par rapport au chariot 14 au niveau de l'articulation 15, qui définit un axe pivot A10 parallèle à la direction longitudinale du véhicule 1. Les bras 17 et 18 s'étendent de part et d'autre de la partie inclinable 16, respectivement sur les côtés 11 et 12 de la rampe 10. Les bras 17 et 18 sont équipés de dispositifs de pulvérisation, qui ne sont pas l'objet de la présente invention. L'envergure de la rampe 10, mesurée entre les extrémités des bras 17 et 18 sur les côtés 11 et 12, est par exemple de l'ordre de 12 à 54 mètres.

Sur l'exemple des figures, la rampe 10 est disposée horizontalement, avec ses bras 17 et 18 positionnés parallèlement au sol. Les bras 17 et 18 peuvent également être positionnés verticalement, ou être inclinés selon toute orientation possible.

La rampe 10 présente une inclinaison α10 réglable par rapport au véhicule 1. L'inclinaison α10 est matérialisée par un angle défini autour de l'axe pivot A10, entre un plan de référence horizontal P14 associé au chariot 14 et un plan inclinable P16 associé à la partie inclinable 16 et aux bras 17 et 18, comme montré à la figure 2. Sur l'exemple de la figure 2, le bras 17 est relevé du côté gauche 11, tandis que le bras 18 est abaissé du côté droit 12, pour remettre les bras 17 et 18 parallèles au sol S.

La rampe 10 est équipée d'un système de commande hydraulique 20, conçu en particulier pour régler l'inclinaison α10. De préférence dans le cadre de l'invention, la modification de l'inclinaison α10 résulte de l'actionnement manuel d'une fonction correction de dévers par l'opérateur, directement depuis sa cabine. Selon une variante de réalisation, la modification de l'inclinaison α10 peut résulter de l'actionnement automatique de la fonction correction de dévers, par une unité de contrôle non représentée.

Le système 20 comprend un vérin de dévers 30, un dispositif de pilotage 40, un dispositif d'amortissement 60 et un dispositif de rechargement 70. Le vérin 30 permet de modifier l'inclinaison α10 de la rampe 10, autrement dit d'ajuster l'angle entre les plans P14 et P16, par action mécanique de la tige 33 sur la partie inclinable 16. Le dispositif 40 permet de piloter le vérin 30 pour incliner la rampe 10. Le dispositif d'amortissement 60 permet d'amortir les vibrations et les oscillations de la rampe 10 lorsque le véhicule 1 roule sur un sol S irrégulier, et ainsi stabiliser l'inclinaison α10. Le dispositif de rechargement 70, activé simultanément au dispositif de pilotage 40, permet de compenser une variation de pression dans le dispositif d'amortissement 60 lors du réglage de l'inclinaison α10 de la rampe 10.

Le système 20 assure également d'autres fonctions, sans rapport direct avec l'objet de la présente invention, mais dont certaines sont mentionnées ci-après. A cet effet, le système 20 comprend d'autres dispositifs, parmi lesquels seul le dispositif 80 est représenté dans un but de simplification. Ces dispositifs 80 et autres peuvent être pilotés par le dispositif de pilotage 40. Le dispositif 80 comprend un distributeur 81 tout-ou-rien, un vérin 82 et un accumulateur 83. Le dispositif 80 permet de déplacer le chariot 14 par rapport au support 13 par action du vérin 82. Les autres dispositifs non représentés permettent notamment de déplier, replier et verrouiller en position les parties constitutives des bras 17 et 18.

Sur l'exemple non limitatif des figures 1 à 10, le vérin 30 est un vérin double effet à tige traversante 33, également dénommée double tige. Le vérin 30 comprend un corps 31, un piston 32 monté mobile en translation dans le corps 31, ainsi que la tige 33 solidaire du piston 32. La tige 33 s'étend de part et d'autre du piston 32, traverse le corps 31 et ressort aux extrémités du corps 31. Le corps 31 comporte une extension 34 articulée sur une platine 19 solidaire de la partie inclinable 16. La tige 33 a une extrémité 35 articulée sur le chariot 14 et une extrémité libre 36. Deux chambres 37 et 38 sont délimitées dans le corps 31, de part et d'autre du piston 32. Les chambres 37 et 38 peuvent être alimentées en fluide sous pression via des raccords, respectivement 370 et 380, montrés sur le corps 31. La pression dans le vérin 30 est fonction de l'envergure de la rampe 10.

En cas de surpression dans la chambre gauche 37 par rapport à la chambre droite 38, le piston 32 et la tige 33 sont repoussés du côté droit 12. L'extrémité 35 de la tige 33 déplace la partie mobile 16 et fait varier l'inclinaison α10, de sorte que le bras gauche 17 est relevé tandis que le bras droit 18 est abaissé.

En cas de surpression dans la chambre droite 38 par rapport à la chambre gauche 37, le piston 32 et la tige 33 sont repoussés du côté gauche 11. L'extrémité 35 de la tige 33 déplace la partie mobile 16 et fait varier l'inclinaison α10, de sorte que le bras gauche 17 est abaissé tandis que le bras droit 18 est relevé.

Le dispositif de pilotage 40 génère l'énergie hydraulique permettant de faire fonctionner le système 20, en particulier le vérin 30. Le dispositif 40 comprend une pompe 41, un réservoir 42, un bloc d'entrée 43 et un bloc fonctionnel 44. Le réservoir 42 forme une source de fluide au sein du système 20. Le bloc d'entrée 43 inclut un distributeur 45 tout-ou-rien, prévu pour autoriser ou interdire la circulation de fluide entre la pompe 41, le réservoir 42 et le bloc fonctionnel 44. Le bloc fonctionnel 44 inclut différents distributeurs associés aux fonctions du système 20, parmi lesquelles un distributeur inverseur 46, deux distributeurs 51 et 52 tout-ou-rien, le distributeur 81 raccordé au vérin 82, ainsi que d'autres distributeurs associés à des dispositifs non représentés équipant le système 20.

Le dispositif 40 comprend également deux limiteurs de débit unidirectionnels 57 et 58, interposés entre le bloc fonctionnel 44 et le vérin 30. Plus précisément, le limiteur 57 est interposé entre le distributeur 51 et le raccord 370, tandis que le limiteur 58 est interposé entre le distributeur 52 et le raccord 380.

Le dispositif d'amortissement 60 comprend deux accumulateurs 61 et 62, deux distributeurs tout-ou-rien 63 et 64, deux clapets anti-retour 65 et 66, ainsi que deux vannes deux voies 67 et 68. Les éléments 61, 63, 65 et 67 sont positionnés du côté gauche 11, entre le limiteur 57, le raccord 370 et le système 70. Les éléments 62, 64, 66 et 68 sont positionnés du côté droit 12, entre le limiteur 58, le raccord 380 et le système 70. Chaque accumulateur 61 et 62 est en communication avec l'une des chambres, respectivement 37 ou 38, du vérin 30. Chaque accumulateur 61 et 62 se présente par exemple comme une boule d'azote, formant un amortisseur hydraulique.

Sur l'exemple des figures, chaque distributeur tout-ou-rien 63 et 64 inclut une position distributeur fermé 601 et une position distributeur ouvert 602. L'amortissement peut être activé ou non, en fonction de la position 601 ou 602 des distributeurs 63 et 64. L'amortissement est inactif en position 601 et actif avec une dureté non modifiable par l'opérateur en position 602.

Selon une variante non représentée, les distributeurs 63 et 64 peuvent être des distributeurs proportionnels. Le débit de circulation de fluide entre chacun des accumulateurs 61 et 62 et la chambre correspondante 37 ou 38 du vérin 30 peut être modifié par l'action des deux distributeurs proportionnels 63 et 64, ce qui permet de modifier la dureté de l'amortissement. Ainsi, l'opérateur de la rampe 10 peut ajuster la dureté de l'amortissement à sa convenance, par exemple en fonction de la nature du terrain, par commande manuelle. Selon des variantes non représentées, cette commande peut être actionnée de différentes manières et située en différents endroits de la machine. En pratique, l'opérateur modifie simultanément la position de chacun des distributeurs 63 et 64 jusqu'à obtenir la dureté d'amortissement souhaitée.

Le dispositif de rechargement 70 comprend un distributeur 71, incluant une position anti-retour 72 et une position de circulation 73. Le dispositif 70 comprend également un limiteur de pression réglable 74 à action directe et un clapet anti-retour 75, disposés en parallèle l'un par rapport à l'autre, et disposés en série par rapport au distributeur 71. Le dispositif 70 est positionné en aval du dispositif 60, par rapport à l'actionneur 30. Si l'un des accumulateurs 61 ou 62 est à une pression différente de l'autre, le dispositif 70 permet de recharger cet accumulateur 61 ou 62, de manière à avoir une même pression dans les deux accumulateurs 61 et 62 lors d'une étape d'amortissement.

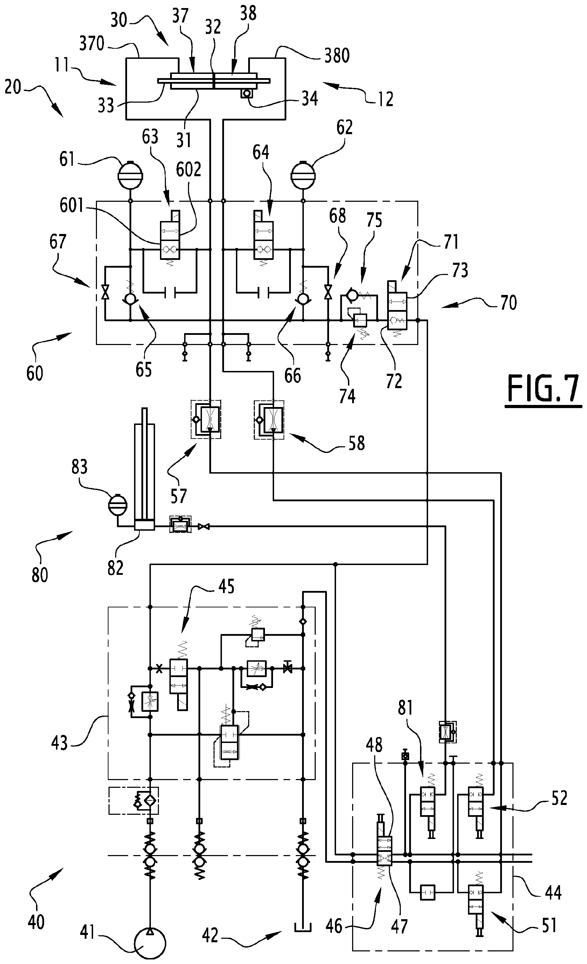

Le fonctionnement du système de commande 20 est détaillé ci-après en référence aux figures 7 à 10.

La figure 7 montre le système 20 au repos. Les distributeurs 45, 51 et 52 sont en position coupée. Le distributeur 71 est en position anti-retour 72. Le fluide ne circule pas au sein du système 20.

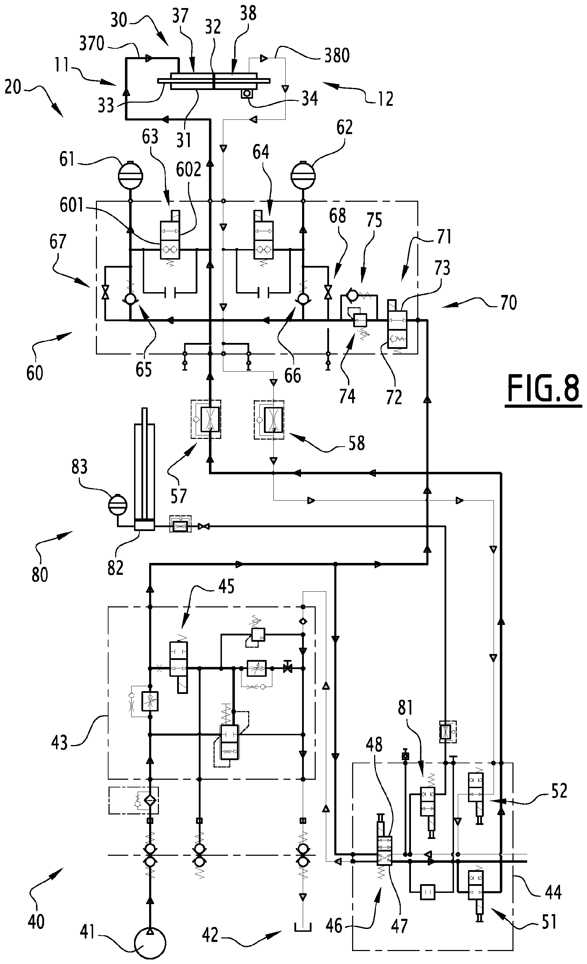

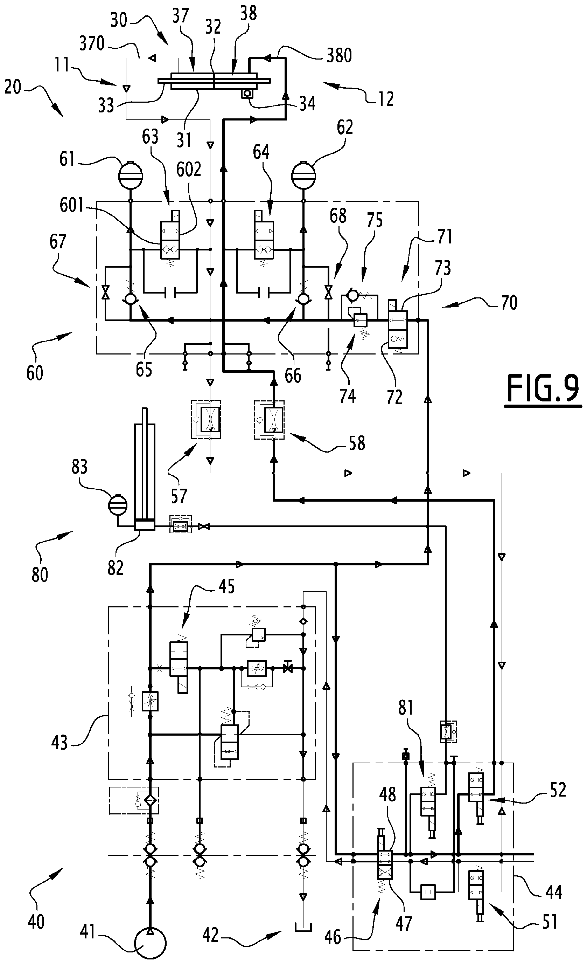

Les figures 8 et 9 montrent le système 20 lors d'une étape de dévers, c'est-à-dire une étape de modification de l'inclinaison α10 de la rampe 10. Les distributeurs 45, 51 et 52 sont en position de circulation. Le distributeur 71 est également en position de circulation 73, pour permettre au dispositif de rechargement 70 d'assurer sa fonction. En pratique, l'étape de dévers est déclenchée manuellement par l'opérateur depuis sa cabine. Selon un premier mode, l'opérateur peut modifier progressivement l'inclinaison α10 jusqu'à atteindre une valeur d'inclinaison α10 souhaitée. Selon un deuxième mode, la valeur d'inclinaison α10 est ajustée automatiquement par un dispositif complémentaire prévu à cet effet, qui n'est pas l'objet de la présente invention.

Durant cette étape de dévers, si l'un des accumulateurs 61 ou 62 est à une pression différente de l'autre, cet accumulateur 61 ou 62 est rechargé par le dispositif de rechargement 70, de manière à avoir un équilibre de pression dans les deux accumulateurs 61 et 62 en fin d'actionnement de la fonction dévers. Sans ce rechargement, un déséquilibre de pression apparaitrait entre les deux accumulateurs 61 et 62, associés respectivement aux chambres 37 et 38 du vérin 30. L'amortissement ne serait alors plus satisfaisant et, dans certains cas, pourrait induire un mouvement incontrôlé du vérin 30 et par conséquent des bras 17 et 18.

Sur la figure 8, le distributeur 46 est en position de circulation 47. La pompe 41 fait circuler du fluide, d'une part, en direction du dispositif de rechargement 70 puis du dispositif d'amortissement 60 et, d'autre part, en direction de la chambre 37 du vérin 30, en traversant le distributeur 46, le distributeur 51, le limiteur 57 et le raccord 370. La chambre 37 est en surpression par rapport à la chambre 38, de sorte que la tige 33 est déplacée du côté droit 12. Du fluide contenu dans la chambre 38 s'échappe par le raccord 380, puis traverse le limiteur 58, le distributeur 52, le distributeur 46, jusqu'au réservoir 42. L'inclinaison α10 de la rampe 10 est modifiée, avec levée du bras gauche 17 et descente du bras droit 18.

Sur la figure 9, le distributeur 46 est en position de circulation 48. La pompe 41 fait circuler du fluide, d'une part, en direction du dispositif de rechargement 70 puis du dispositif d'amortissement 60 et, d'autre part, en direction de la chambre 38 du vérin 30, en traversant le distributeur 46, le distributeur 52, le limiteur 58 et le raccord 380. La chambre 38 est en surpression par rapport à la chambre 37, de sorte que la tige 33 est déplacée du côté gauche 11. Du fluide contenu dans la chambre 37 s'échappe par le raccord 370, puis traverse le limiteur 57, le distributeur 51, le distributeur 46, jusqu'au réservoir 42. L'inclinaison α10 de la rampe 10 est modifiée, avec descente du bras gauche 17 et levée du bras droit 18.

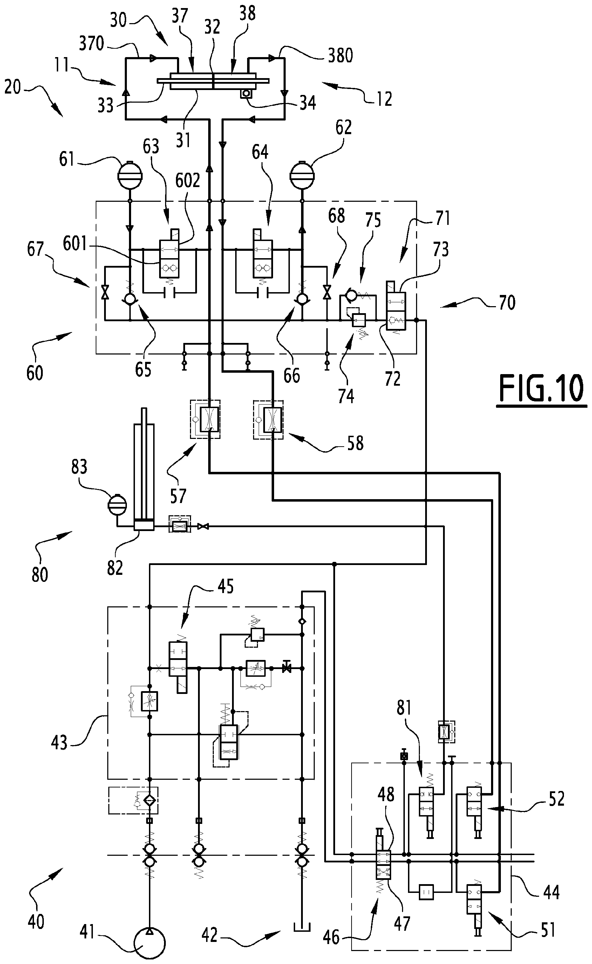

La figure 10 montre le système 20 lors d'une étape d'amortissement, lorsque la rampe 10 est en service, avec une inclinaison α10 donnée. Les distributeurs 51 et 52 sont alors en position coupée. Le distributeur 71 est en position anti-retour 72, correspondant également à une position coupée. Les distributeurs 63 et 64 sont en position de circulation 602.

Tandis que l'étape de dévers est déclenchée manuellement par l'opérateur, l'étape d'amortissement est déclenchée de manière automatique, sans intervention de l'opérateur, en fonction des vibrations et oscillations affectant la rampe 10. En pratique, l'amortissement permet de maintenir l'inclinaison α10 dans une plage dont l'amplitude est fonction de l'envergure de la rampe 10. A titre d'exemple non limitatif, cette plage peut être de ±5° par rapport à la valeur définie lors de l'étape de dévers.

Sur l'exemple simplifié de la figure 10, des contraintes mécaniques s'exercent sur la rampe 10, en tendant à déplacer la tige 33 vers le côté droit 12. La chambre 37 se retrouve en dépression par rapport à la chambre 38. En réaction, du fluide circule de l'accumulateur 61 vers la chambre 37, tandis que du fluide circule de la chambre 38 vers l'accumulateur 62, produisant ainsi l'amortissement du mouvement des bras 17 et 18.

Lors d'une étape ultérieure de dévers, le rechargement permet d'atteindre un équilibre de pression au sein du dispositif d'amortissement 60. Sans ce rechargement, un déséquilibre de pression serait maintenu entre les deux accumulateurs 61 et 62 après l'étape d'amortissement, de sorte qu'un amortissement ultérieur ne serait pas satisfaisant et, dans certains cas, pourrait induire un mouvement incontrôlé du vérin 30 et par conséquent des bras 17 et 18.

Par ailleurs, le véhicule 1, la rampe de pulvérisation 10 et/ou le système de commande 20 peuvent être conformés différemment des figures 1 à 10 sans sortir du cadre de l'invention.

En variante non représentée, l'actionneur 30 peut être configuré autrement qu'un vérin double effet à tige traversante. Par exemple, l'actionneur 30 peut être formé par deux vérins simple effet de même section et montés en opposition.

Selon une autre variante non représentée, le dispositif de pilotage 40 peut être configuré autrement que sur les figures.

En outre, les caractéristiques techniques des différents modes de réalisation et variantes mentionnés ci-dessus peuvent être, en totalité ou pour certaines d'entre elles, combinées entre elles. Ainsi, le système de commande 20 peut être adapté en termes de coût, de fonctionnalités et de performance.

## Revendications

1. Système de commande (20), prévu pour équiper une rampe de pulvérisation (10) montée sur un porteur (1) et présentant une inclinaison (α10) réglable par rapport au porteur (1), le système de commande (20) comprenant :
- un actionneur (30) pour modifier l'inclinaison (α10) de la rampe de pulvérisation (10) ;
- un dispositif de pilotage (40) pour piloter l'actionneur (30) ; et
- un dispositif d'amortissement (60) connecté à l'actionneur (30) pour amortir des vibrations et oscillations de la rampe de pulvérisation (10) et ainsi stabiliser l'inclinaison (α10) ;
**caractérisé en ce que** le système de commande (20) comprend également un dispositif de rechargement (70) fonctionnant simultanément au dispositif de pilotage (40) pour compenser une variation de pression dans le dispositif d'amortissement (60) lors d'une modification de l'inclinaison (α10) de la rampe de pulvérisation (10).

2. Système de commande (20) selon la revendication 1, **caractérisé en ce que** la modification de l'inclinaison (α10) de la rampe de pulvérisation (10) résulte de l'actionnement manuel d'une fonction correction de dévers par l'opérateur.

3. Système de commande (20) selon la revendication 1, **caractérisé en ce que** la modification de l'inclinaison (α10) de la rampe de pulvérisation (10) résulte de l'actionnement automatique d'une fonction correction de dévers.

4. Système de commande (20) selon l'une des revendications 1 à 3, **caractérisé en ce que** le dispositif de rechargement (70) comprend un distributeur (71) incluant une position anti-retour (72) et une position de circulation (73).

5. Système de commande (20) selon la revendication 4, **caractérisé en ce que** le dispositif de rechargement (70) comprend également un limiteur de pression réglable (74) à action directe et un clapet anti-retour (75), disposés en parallèle l'un par rapport à l'autre, et disposés en série par rapport au distributeur (71).

6. Système de commande (20) selon l'une quelconque des revendications précédentes, **caractérisé en ce que** le dispositif de rechargement (70) est positionné en aval du dispositif d'amortissement (60), par rapport à l'actionneur (30).

7. Système de commande (20) selon l'une quelconque des revendications 1 à 6, **caractérisé en ce que** l'actionneur (30) est un vérin double effet à tige traversante, comprenant un corps creux (31), un piston (32) mobile dans le corps creux (31), une tige (33) solidaire du piston (32) et s'étendant de chaque côté du corps (31), et deux chambres (37, 38) séparées par le piston (32) dans le corps (31).

8. système de commande (20) selon l'une quelconque des revendications 1 à 6, **caractérisé en ce que** l'actionneur (30) est formé par deux vérins simple effet montés en opposition et présentant une même section.

9. Système de commande (20) selon l'une quelconque des revendications précédentes, **caractérisé en ce que** le dispositif d'amortissement (60) comprend deux accumulateurs (61, 62), chacun rechargeable par le dispositif de rechargement (70) en cas de dépression par rapport à l'autre accumulateur (61, 62).

10. Système de commande (20) selon l'une quelconque des revendications précédentes, **caractérisé en ce que** le dispositif d'amortissement (60) comprend deux distributeurs tout-ou-rien (63, 64), de manière à activer ou désactiver l'amortissement.

11. Système de commande (20) selon l'une quelconque des revendications précédentes, **caractérisé en ce que** le dispositif d'amortissement (60) comprend deux distributeurs proportionnels (63, 64), de manière à régler la dureté d'amortissement.

12. Rampe de pulvérisation (10) adaptée pour être montée sur un porteur (1) et présentant une inclinaison (α10) réglable, **caractérisée en ce que** la rampe de pulvérisation (10) est équipée d'un système de commande (20) selon l'une des revendications 1 à 11.

13. Porteur (1) équipé d'une rampe de pulvérisation (10) selon la revendication 12.

14. Procédé de mise en oeuvre d'un système de commande (20) selon l'une des revendications 1 à 11, le procédé comprenant une étape de dévers consistant à modifier l'inclinaison (α10) de la rampe de pulvérisation (10), dans laquelle le dispositif de pilotage (40) pilote l'actionneur (30) tandis que le dispositif de rechargement (70) compense une variation de pression dans le dispositif d'amortissement (60).

## Patentansprüche

1. Steuerungssystem (20), mit dem ein Sprühbalken (10) ausgestattet werden soll, der an einem Träger (1) montiert ist und eine einstellbare Neigung (α10) gegenüber dem Träger (1) aufweist, wobei das Steuerungssystem (20) umfasst:
- einen Aktor (30) zum Verändern der Neigung (α10) des Sprühbalkens (10);
- eine Ansteuervorrichtung (40) zum Ansteuern des Aktors (30), und
- eine Dämpfungsvorrichtung (60), die mit dem Aktor (30) verbunden ist, um Vibrationen und Schwingungen des Sprühbalkens (10) zu dämpfen und so die Neigung (α10) zu stabilisieren;
**dadurch gekennzeichnet, dass** das Steuerungssystem (20) zudem eine Ladevorrichtung (70) umfasst, die gleichzeitig mit der Ansteuervorrichtung (40) arbeitet, um eine Druckschwankung in der Dämpfungsvorrichtung (60) bei einer Änderung der Neigung (α10) des Sprühbalkens (10) auszugleichen.

2. Steuerungssystem (20) nach Anspruch 1, **dadurch gekennzeichnet, dass** die Änderung der Neigung (α10) des Sprühbalkens (10) von der manuellen Betätigung einer Neigungskorrekturfunktion durch die Bedienperson herrührt.

3. Steuerungssystem (20) nach Anspruch 1, **dadurch gekennzeichnet, dass** die Änderung der Neigung (α10) des Sprühbalkens (10) von der automatischen Betätigung einer Neigungskorrekturfunktion herrührt.

4. Steuerungssystem (20) nach einem der Ansprüche 1 bis 3, **dadurch gekennzeichnet, dass** die Ladevorrichtung (70) ein Wegeventil (71) mit einer Sperrstellung (72) und einer Durchlassstellung (73) umfasst.

5. Steuerungssystem (20) nach Anspruch 4, **dadurch gekennzeichnet, dass** die Ladevorrichtung (70) zudem einen direkt wirkenden, regelbaren Druckbegrenzer (74) und ein Rückschlagventil (75) umfasst, die parallel zueinander und in Reihe zum Wegeventil (71) angeordnet sind.

6. Steuerungssystem (20) nach einem der vorhergehenden Ansprüche, **dadurch gekennzeichnet, dass** die Ladevorrichtung (70) im Verhältnis zum Aktor (30) stromabwärts der Dämpfungsvorrichtung (60) angeordnet ist.

7. Steuerungssystem (20) nach einem der Ansprüche 1 bis 6, **dadurch gekennzeichnet, dass** der Aktor (30) ein doppelt wirkender Zylinder mit durchgehender Kolbenstange ist, umfassend einen Hohlkörper (31), einen in dem Hohlkörper (31) beweglichen Kolben (32), eine Stange (33), die fest mit dem Kolben (32) verbunden ist und sich zu beiden Seiten des Körpers (31) erstreckt, und zwei Kammern (37, 38), die durch den Kolben (32) in dem Körper (31) voneinander getrennt sind.

8. Steuerungssystem (20) nach einem der Ansprüche 1 bis 6, **dadurch gekennzeichnet, dass** der Aktor (30) durch zwei einfach wirkende Zylinder gebildet ist, die einander gegenüberliegend montiert sind und einen gleichen Querschnitt aufweisen.

9. Steuerungssystem (20) nach einem der vorhergehenden Ansprüche, **dadurch gekennzeichnet, dass** die Dämpfungsvorrichtung (60) zwei Akkumulatoren (61, 62) umfasst, die im Falle einer Absenkung gegenüber dem jeweils anderen Akkumulator (61, 62) jeweils durch die Ladevorrichtung (70) wiederaufladbar sind.

10. Steuerungssystem (20) nach einem der vorhergehenden Ansprüche, **dadurch gekennzeichnet, dass** die Dämpfungsvorrichtung (60) zwei Ein/Aus-Wegeventile (63, 64) umfasst, um die Dämpfung zu aktivieren oder zu deaktivieren.

11. Steuerungssystem (20) nach einem der vorhergehenden Ansprüche, **dadurch gekennzeichnet, dass** die Dämpfungsvorrichtung (60) zwei Proportionalventile (63, 64) umfasst, um die Dämpfungshärte zu regulieren.

12. Sprühbalken (10), der dazu ausgelegt ist, an einem Träger (1) montiert zu werden, und eine einstellbare Neigung (α10) aufweist, **dadurch gekennzeichnet, dass** der Sprühbalken (10) mit einem Steuerungssystem (20) nach einem der Ansprüche 1 bis 11 ausgestattet ist.

13. Träger (1), der mit einem Sprühbalken (10) nach Anspruch 12 ausgestattet ist.

14. Verfahren zur Implementierung eines Steuerungssystems (20) nach einem der Ansprüche 1 bis 11, wobei das Verfahren einen Neigungsschritt umfasst, der darin besteht, die Neigung (α10) des Sprühbalkens (10) zu verändern, wobei die Ansteuervorrichtung (40) den Aktor (30) ansteuert, während die Ladevorrichtung (70) eine Druckschwankung in der Dämpfungsvorrichtung (60) ausgleicht.

## Claims

1. A control system (20), provided to equip a spray bar (10) mounted on a carrier (1) and having an adjustable angle (α10) relative to the carrier (1), the control system (20) comprising:
- an actuator (30) to change the angle (α10) of the spray bar (10);
- a control device (40) to control the actuator (30); and
- a damping device (60) connected to the actuator (30) to damp vibrations and oscillations of the spray bar (10) and thus to stabilize the angle (α10);
**characterized in that** the control system (20) further comprises a recharging device (70) operating simultaneously with the control device (40) to compensate for a pressure change in the damping device (60) during a change in the angle (α10) of the spray bar (10).

2. The control system (20) according to claim 1, **characterized in that** the modification of the angle (α10) of the spray bar (10) results from a by operator manual actuation for a tilt correction function.

3. The control system (20) according to claim 1, **characterized in that** the modification of the angle (α10) of the spray bar (10) results from an automatic actuation for a tilt correction function.

4. The control system (20) according to one of claims 1 to 3, **characterized in that** the recharging device (70) comprises a distributor (71) including a non-return position (72) and a circulation position (73).

5. The control system (20) according to claim 4, **characterized in that** the recharging device (70) also comprises a direct-action adjustable pressure limiter (74) and a check valve (75), positioned in parallel relative to one another, and positioned in series relative to the distributor (71).

6. The control system (20) according to any one of the preceding claims, **characterized in that** the recharging device (70) is positioned downstream from the damping device (60), relative to the actuator (30).

7. The control system (20) according to any one of claims 1 to 6, **characterized in that** the actuator (30) is a through rod double-acting cylinder comprising a hollow body (31), a piston (32) moving in the hollow body (31), a rod (33) secured to the piston (32) and extending on each side of the body (31), and two chambers (37, 38) separated by the piston (32) in the body (31).

8. The control system (20) according to any one of claims 1 to 6, **characterized in that** the actuator (30) is formed by two single-acting cylinders mounted in opposition and having a same cross-section.

9. The control system (20) according to any one of the preceding claims, **characterized in that** the damping device (60) comprises two accumulators (61, 62), each rechargeable by the recharging device (70) in case of underpressure relative to the other accumulator (61, 62).

10. The control system (20) according to any one of the preceding claims, **characterized in that** the damping device (60) comprises two all-or-nothing distributors (63, 64), so as to activate or deactivate the damping.

11. The control system (20) according to any one of the preceding claims, **characterized in that** the damping device (60) comprises two proportional distributors (63, 64), so as to adjust the damping hardness.

12. A spray bar (10), suitable for being mounted on a carrier (1) and having an adjustable angle (α10), **characterized in that** the spray bar (10) is equipped with a control system (20) according to one of the preceding claims 1 to 11.

13. A carrier (1) equipped with a spray bar (10) according to claim 12.

14. A method for implementing a control system (20) according to one of claims 1 to 11, the method comprising a tilting step for modifying the angle (α10) of the spray bar (10), wherein in the tilting step, the control device (40) controls the actuator (30) while the recharging device (70) compensates for a pressure variation in the damping device (60).
